(19) **Europäisches Patentamt**

**European Patent Office**

**Office européen des brevets**

(11) Veröffentlichungsnummer: **0 279 868 B1**

(12) **EUROPÄISCHE PATENTSCHRIFT**

(45) Veröffentlichungstag der Patentschrift:
13.06.90

(51) Int. Cl.⁵: **B60T 11/10**, B62D 11/08

(21) Anmeldenummer: **87101888.3**

(22) Anmeldetag: **11.02.87**

(54) **Brems- und Lenkbremsanlage, insbesondere für Ackerschlepper und dergleichen Fahrzeuge.**

(43) Veröffentlichungstag der Anmeldung:
31.08.88 Patentblatt 88/35

(45) Bekanntmachung des Hinweises auf die Patenterteilung:
13.06.90 Patentblatt 90/24

(84) Benannte Vertragsstaaten:
AT DE FR GB IT

(56) Entgegenhaltungen:
DE-A- 2 052 401
DE-A- 3 208 393

(73) Patentinhaber: Xaver Fendt & Co.,
Johann-Georg-Fendt-Strasse 4,
D-8952 Marktoberdorf(DE)

(72) Erfinder: Reisch, Johann, Saliterstrasse 90,
D-8952 Marktoberdorf(DE)
Erfinder: Wiesler, Bruno, Heuweg 5,
D-8952 Marktoberdorf(DE)
Erfinder: Horsak, Erich, Korberweg 22,
D-8952 Marktoberdorf(DE)

## Beschreibung

Die Erfindung betrifft ein Bremspedal für eine Brems- und Lenkbremsanlage an Fahrzeugen, insbesondere an Ackerschleppern, mit einer zur Durchführung von Lenkbremsungen aus einer zum Pedalfuß federkraftzentrierten Mittelstellung für Normalbremsungen nach beiden Seiten verschwenkbaren Trittplatte.

Ein derartiges Bremspedal geht aus der DE-OS 2 052 401 hervor, welche Druckschrift eine Bremsanlage für wahlweise Allrad- oder Einzelradbremsung beschreibt. Bei dem dort beschriebenen Bremspedal ist die Trittplatte um eine Achse relativ zum Pedalfuß aus einer Mittelstellung nach beiden Seiten verschwenkbar. Wird das Bremspedal mittig niedergetreten, ohne dabei die Trittplatte aus der Mittelstellung zu verschwenken, so sind die Bremszylinder auf beiden Fahrzeugseiten druckbeaufschlagt und das Fahrzeug wird in normaler Weise abgebremst. Verschwenkt jedoch die Trittplatte bei einem außermittigen Niedertreten des Bremspedals nach einer Seite, so wird lediglich der oder die Bremszylinder der Fahrzeugseite druckbeaufschlagt, die der niedergetretenen Seite der Trittplatte zugeordnet sind. Es erfolgt ein Abbremsen des Fahrzeuges lediglich an dieser Seite, wodurch ein gleichzeitig eingeleiteter Lenkvorgang in der betreffenden Richtung verstärkt wird. Nach dem Loslassen des Bremspedals kehrt die Trittplatte unter der Kraft einer Feder wieder in die Mittelstellung zurück.

Mit dem bekannten Bremspedal lassen sich somit je nach dem, an welcher Stelle die Trittplatte druckbeaufschragt wird, für eine Normalbremsung alle Bremszylinder des Fahrzeuges oder für Lenkbremsungen nur die einer Fahrzeugseite beaufschlagen. Allerdings bietet dieses Bremspedal in der gezeigten Ausführung keine ausreichende Sicherheit dafür, daß eine beabsichtigte Normalbremsung auch tatsächlich erfolgt. Allzu leicht ist es nämlich möglich, daß der Fahrer beim Niedertreten des Bremspedals nicht mit der erforderlichen Genauigkeit genau zentrisch auf die Trittplatte tritt und dadurch unbeabsichtigt einen Lenkbremsvorgang auslöst. Die Verkehrssicherheit eines Fahrzeuges, das mit dem bekannten Bremspedal ausgerüstet ist, läßt somit sehr zu wünschen übrig, wenn nicht eine zusätzliche mechanische Verriegelung der Trittplatte gegenüber dem Pedalfuß vorgesehen wird, deren Störanfälligkeit oder Fehlbedienung jedoch abermals Sicherheitsbedenken aufwirft.

Ein geringes außermittiges Betätigen der Trittplatte ist zwar ohne große Bedeutung, da einem allzu schnellen Nachgeben der Trittplatte nach einer der beiden Seiten die Feder entgegenwirkt. Diese kann aber nicht so steif ausgeführt werden, wie dies notwendig wäre, um dem Fahrer eine sichere und trotzdem bequeme Betätigung der Trittplatte zu erlauben, da in diesem Falle das Einleiten eines Lenkbremvorganges, der ja ein Verschwenken der Trittplatte erfordert, erschwert würde.

Aufgabe der Erfindung ist es daher, ein Bremspedal der eingangs beschriebenen Gattung so auszugestalten, daß die zum Verschwenken der Trittplatte benötigte Kraft gering ist und dennoch Fehlbestätigungen des Pedals selbst dann mit Sicherheit vermieden werden, wenn der Fahrer einen Bremsvorgang überstürzt auslöst.

Zur Lösung dieser Aufgabe wird vorgeschlagen, daß die Trittplatte in ihrer Mittelstellung über zwei im Abstand nebeneinander angeordnete Achsbolzen in Betätigungsrichtung der Trittplatte mittels Federkraft am Pedalfuß abgestützt, entgegengesetzt dazu jedoch freigängig ist, und daß durch den Abstand der Achsbolzen an der Trittplatte zwei äußere Bereiche für Lenkbremsungen und ein mittlerer Bereich für Normalbremsungen definiert sind, wobei beim Niedertreten der Trittplatte in einem der äußeren Bereiche von den Achsbolzen jeweils nur der diesen Bereich definierende Achsbolzen die Abstützung der Trittplatte gegenüber dem Pedalfuß übernimmt und beim Niedertreten der Trittplatte im mittleren Bereich beide Achsbolzen gemeinsam die Abstützung der Trittplatte gegenüber dem Pedalfuß übernehmen.

Durch die Verwendung von zwei einen seitlichen Abstand voneinander aufweisende Achsbolzen kann der Bereich der Trittplatte, bei dessen Betätigung ein Verschwenken mit Sicherheit nicht eintritt, beliebig verbreitert werden, so daß die Gefahr einer Fehlbetätigung des Bremspedals wesentlich herabgesetzt und die Betriebssicherheit des Fahrzeuges auch ohne eine mechanische Verriegelungsmöglichkeit der Trittplatte verbessert ist. Da die Kraft der die Trittplatte in die Mittelstellung zurückziehenden Feder nicht mehr aus Sicherheitsgründen verhältnismäßig groß gehalten werden muß, kann die Feder wesentlich schwächer ausgeführt werden, so daß das Verschwenken der Trittplatte bei einem Lenkbremsvorgang keine wesentliche Kraftanstrengung für den Fahrer mit sich bringt.

Weitere zweckmäßige Ausgestaltungen der Erfindung sind in den Unteransprüchen beschrieben.

Die Erfindung wird im folgenden anhand einer Zeichung näher erläutert. Es zeigt:

Fig. 1 Eine schematische Darstellung einer Brems- und Lenkbremsanlage,
Fig. 2 eine Schnittansicht eines Bremspedals der Anlage nach Fig. 1 nach der Linie A–B in Fig. 3,
Fig. 3 eine Seitenansicht des Bremspedals gemäß Fig. 2,
Fig. 4 ein Ausführungsbeispiel der erfindungsgemäßen Bremspedals nach der Linie C–D in Fig. 5 und
Fig. 5 eine Seitenansicht des Bremspedals gemäß Fig. 4.

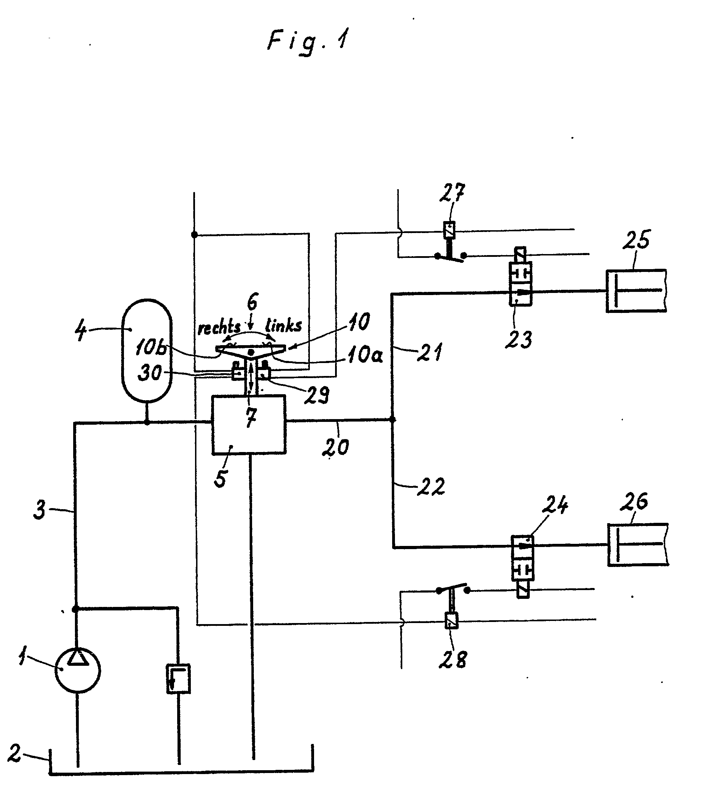

Die in Fig. 1 gezeigte Lenk- und Lenkbremsanlage weist als Drucklieferanten eine Pumpe 1 auf, die aus einem Sammelbehälter 2 Druckmittel entnimmt und über eine Leitung 3 einem Speicher 4 zuführt. Ein dem Speicher 4 vorgeschaltetes Speicherladeventil hält den Druck im Speicher auf einem vorgegebenen Wert aufrecht. An den Speicher 4 angeschlossen ist ein einziges Fremdkraftbremsventil 5, das über ein Bremspedal 6 betätigbar ist.

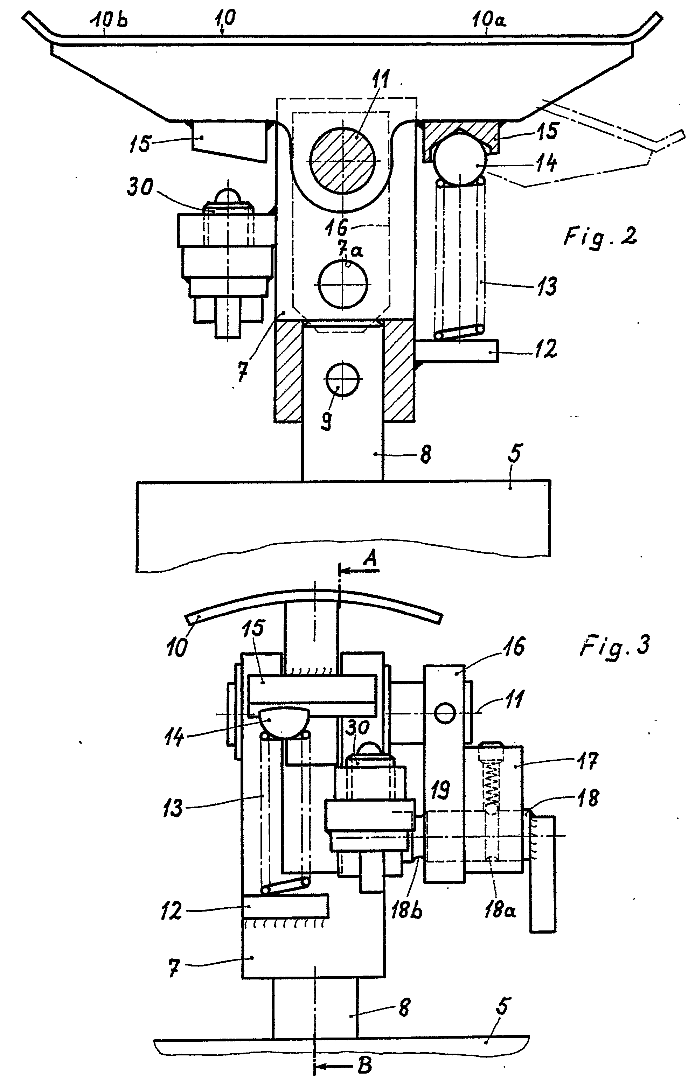

Nach den Fig. 2 und 3 weist das Bremspedal 6 einen gabelförmigen Pedalfuß 7 auf, der mit einem rohrförmigen Teil auf das Betätigungselement 8 des Fremdkraftbremsventils 5 aufgeschoben und mittels eines Bolzens 9 gegen Verdrehen und Verschieben gesichert ist. Im freien Endbereich trägt der Pedalfuß 7 eine Trittplatte 10, die zur Durchführung von Normalbremsungen fest mit dem Pedalfuß 7 verbindbar ist und zur Durchführung von Lenkbremsungen in herkömmlicher Weise um einen annähernd in Fahrzeuglängsrichtung verlaufenden Achsbolzen 11 begrenzt schwenkbeweglich ist. Der mit der Trittplatte 10 verschwenkende Achsbolzen 11 teilt die Trittplatte 10 in zwei Bereiche auf, von denen der in Fahrtrichtung gesehen linke Bereich 10a für eine Lenkbremsung nach links und der in Fahrtrichtung gesehen rechts liegende Bereich 10b für eine Lenkbremsung nach rechts vorgesehen ist. Unterhalb eines jeden der Bereiche 10a, 10b ist im unteren Teil des Pedalfußes 7 ein Auflagerblech 12 angeschweißt, auf das sich eine vorgespannte Druckfeder 13 abstützt. Mit ihrem anderen Ende liegt die Druckfeder 13 an einer Kugel 14 an, die in eine entsprechend große Ausnehmung einer unter der Trittplatte 10 befestigten Leiste 15 eingreift. Um auch dann sichere Normalbremsungen ausführen zu können, wenn das Bremspedal 6 auf "Lenkbremsungen" eingestellt ist, ist die Vorspannung der Druckfedern 13 so hoch gewält, daß bei geringfügigem außermittigem Kraftangriff kein Verschwenken der Trittplatte 10 erfolgen kann.

Der Achsbolzen 11 ragt auf der dem Fahrer abgewandten Seite des Bremspedals 6 aus dem Pedalfuß 7 heraus und trägt auf dieser seiner Verlängerung einen drehfest mit ihm verbundenen, in Normalstellung der Trittplatte 10 nach unten ragenden Hebel 16. In seinem freien Endbereich ist an dem Hebel 16 ein Klotz 17 befestigt, wobei eine Bohrung beide Teile durchquert. Fluchtend zu dieser Bohrung ist im Pedalfuß 7 eine weitere, gleich große und ausreichend tiefe Bohrung 7a vorgesehen. In der Bohrung des Hebels 16 ist ein Bolzen 18 zwischen zwei Endstellungen verschiebbar, die durch zwei Umfangsrillen 18a, 18b des Bolzens 18 definiert sin, in welche bei entsprechender Stellung des Bolzens 18 eine im Klotz 17 geführte Kugel 19 einfällt. In der eingeschobenen Stellung des Bolzens 18, in welcher dieser in die Bohrung 7a am Pedalfuß 7 eingreift, ist die Trittplatte 10 gegenüber dem Pedalfuß 7 verriegelt und so im Sinne von Normalbremsungen betätigbar. In der herausgezogenen Endstellung greift der Bolzen 18 nicht in die Bohrung 7a ein. Die Trittplatte 10 ist daher gegenüber dem Pedalfuß 7 gegen die Kraft der Druckfedern 13 verschwenkbar und somit im Sinne von Lenkbremsungen oder Normalbremsungen betätigbar.

Bei einer Betätigung des Bremspedals 6 speist das Fremdkraftbremsventil 5 Druckmittel aus dem Speicher 4 in eine Druckleitung 20 ein, die sich in zwei Zweigleitungen 21, 22 aufteilt, welche ihrerseits jeweils ein Ventil 23, 24 enthalten und zu dem jeweils zugeordneten Bremszylinder 25, 26 der Radbremse führen. Bei den Ventilen 23, 24 handelt es sich um elektromagnetisch aunsteuerbare 2/2-Wegeventile, die so in den Zweigleitungen 21, 22 angeordnet sind, daß sie in unbetätigtem Zustand den Durchgang vom Fremdkraftbremsventil 5 zu den Bremszylindern 25, 26 freigeben. Die Ansteuerung der Ventile 23, 24 erfolgt durch Relais 27, 28, die ihrerseits durch am Pedalfuß 7 des Bremspedals 6 befestigte Schalter 29, 30 gesteuert werden. Jeder Schalter 29, 30 wirkt dabei mit einem der Bereiche 10a, 10b der Trittplatte 10 zusammen und ist daher nur bei schwenkbeweglich eingestellter Trittplatte 10 durch die Leiste 15 des ihm zugeordneten Bereiches 10a, 10b schaltbar, sofern dieser niedergetreten ist.

Die Funktionsweise der beschriebenen Brems- und Lenkbremsanlage ist wie folgt:

Zur Durchführung von Normalbremsungen ist die Trittplatte 10 gegenüber dem Pedalfuß 7 verriegelt, so daß selbst bei einer außermittigen Belastung derselben keiner der Bereiche 10a, 10b einen der Schalter 29, 30 betätigen kann. Das entsprechend der Fußkraft betätigte Bremskraftventil 5 speist Druckmittel in die Druckleitung 20 und die Zweigleitung 21, 22 ein, von wo es über die in Durchgangsstellung befindlichen Ventile 23, 24 zu den Bremszylindern 25, 26 beider Radbremsen strömen kann und dort einen Bremsvorgang bewirkt.

Sollen Lenkbremsungen durchgeführt werden, so wird die Trittplatte 10 gegenüber dem Pedalfuß 7 entriegelt. Wird nun die Trittplatte 10 etwa oberhalb des Achsbolzens 11 beaufschlagt, so verhindern die Druckfedern 13, durch die die Trittplatte 10 gegenüber dem Pedalfuß 7 zentriert ist, daß die Trittplatte 10 verschwenkt. Es kommt zu einem normalen Bremsvorgang, wie dieser oben bereits beschrieben ist. Erfolgt jedoch zur Durchführung z. B. einer Lenkbremsung nach links die Beaufschlagung der Trittplatte 10 im Bereich 10a, so wird dieser entgegen der Kraft der darunter befindlichen Druckfeder 13 um den zur Verfügung stehenden Schwenkwinkel niedergedrückt (in Fig. 2 strichpunktiert angedeutet) und dabei der zugeordnete Schalter 29 geschlossen. Dadurch zieht das zugeordnete Relais 27 an und schaltet das den Bremszylinder 25 auf der rechten Fahrzeugseite versorgende Ventil 23 in seine Sperrstellung, so daß der betreffende Bremszylinder nicht vom Druckmittel des Fremdkraftventils 5 beaufschlagt wird. Das bedeutet, daß nur die dem betätigten Bereich zugeordnete Radbremse bremsend zur Wirkung gelangt, wobei eine Lenkbremsung zur gewünschten Seite erfolgt. Entsprechendes gilt für den Schalter 30, das Relais 28, das Ventil 24 und den Bremszylinder 26 der auf der anderen Fahrzeugseite liegenden Radbremse, wenn der Bereich 10 b der Trittplatte 10 niedergetreten wird, um eine Lenkbremsung nach rechts zu erzielen.

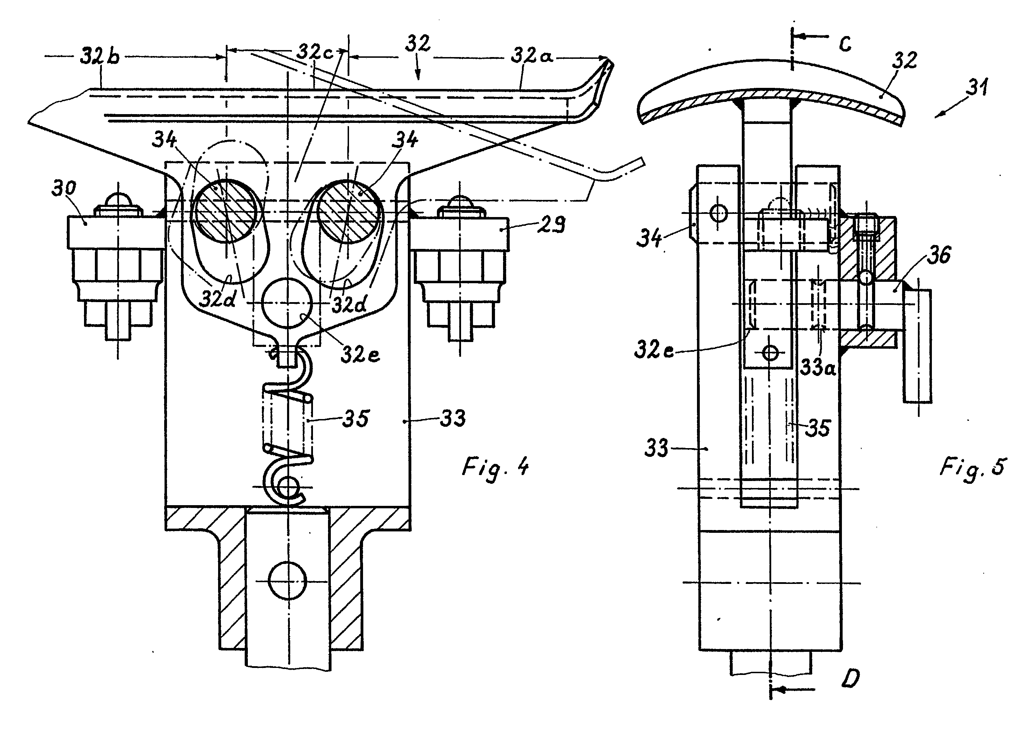

In den Fig. 4 und 5 ist in der erfindungsgemäßen Weise ausgebildetes Bremspedal 31 gezeigt, das es dem Fahrer erleichtert, bei eingestellter Bremsart "Lenkbremsung" Normalbremsungen auszuführen. Von dem oben beschriebenen Bremspedal 6 unterscheidet sich dieses im wesentlichen durch die Lagerung der Trittplatte 32. An Stelle eines Achsbolzens 11 sind am Pedalfuß 33 in Längsrichtung des zugehörigen Fahrzeuges nebeneinander zwei Achsbolzen 34 gelagert, die zwei Langlöcher 32d in der Trittplatte 32 durchqueren. Eine mittig zwischen den Langlöchern 32d an der Trittplatte 32 angreifende und sich am Pedalfuß 33 abstützende Zugfeder 35 hält die Trittplatte 32 mit beiden Langlöchern 32d in Kontakt mit den Achsbolzen 34. In dieser waagerechten Mittelstellung der Trittplatte 32 fluchten zwei Bohrungen 33a, 32a im Pedalfuß 33 und in der Trittplatte 32, so daß beide Teile mittels eines Bolzens 36 verriegelbar sind. Da die verriegelte Trittplatte 32, gleichgültig wo sie beim Bremsen beaufschlagt wird, nicht verschwenden kann, wird keiner der Schalter 29,30 betätigt und es findet eine Normalbremsung statt.

Soll die Bremsanlage in der Bremsart "Lenkbremsungen" betrieben werden, so ist der Bolzen 36 aus der Bohrung 32e der Trittplatte 32 herauszuziehen. Dadurch kommen drei an der Trittplatte 32 gebildete Bereiche 32a, 32b und 32c zur Geltung, wobei der Bereich 32a eine "Lenkbremsung links", der Bereich 32b eine "Lenkbremsung rechts" und der Bereich 32c eine Normalbremsung bewirkt. Während sich die Bereiche 32a, 32b jeweils von der Mitte des Achsbolzens 34, der auf der bezogen auf die Fahrtrichtung entsprechenden Seite angeordnet ist, nach außen erstrecken, befindet sich der Bereich 32c zwischen den beiden Bolzen 34. Wird die Trittplatte 32 beispielsweise im Bereich 32a niedergetreten, so verschwenkt diese zunächst um den in Fahrtrichtung links liegenden Bolzen 34, bis die der bisherigen Anlagefläche des benachbarten Langloches 32d gegenüberliegende Fläche an dem anderen Achsbolzen 34 anliegt und der Schalter 29 betätigt wird. Hierzu erstreckt sich jedes einen Achsbolzen 34 aufnehmende Langloch 32d im wesentlichen in Richtung der Tangente an einen Kreis, dessen Mittelpunkt mit der Achse des jeweils anderen Bolzens 34 zusammenfällt. Anschließend wird durch weiteres Niedertreten des Bremspedals 31 das Fremdkraftbremsventil 5 aktiviert. Entsprechendes gilt für den Bereich 32b.

## Patentansprüche

1. Bremspedal für eine Brems- und Lenkbremsanlage an Fahrzeugen, insbesondere Ackerschleppern, mit einer zur Durchführung von Lenkbremsungen aus einer zum Pedalfuß federkraftzentrierten Mittelstellung für Normalbremsungen nach beiden Seiten verschwenkbaren Trittplatte, dadurch gekennzeichnet, daß die Trittplatte (32) in ihrer Mittelstellung über zwei im Abstand nebeneinander angeordnete Achbolzen (34) in Betätigungsrichtung der Trittplatte (32) mittels Federkraft am Pedalfuß (33) abgestützt, entgegengesetzt dazu jedoch freigängig ist, und daß durch den Abstand der Achsbolzen (34) an der Trittplatte (32) zwei äußere Bereiche (32a, 32b) für Lenkbremsungen und ein mittlerer Bereich (32c) für Normalbremsungen definiert sind, wobei beim Niedertreten der Trittplatte (32) in einem der äußeren Bereiche (32a, 32b) von den Achsbolzen (34) jeweils nur der diesen Bereich definierende Achsbolzen (34) die Abstützung der Trittplatte (32) gegenüber dem Pedalfuß (33) übernimmt und beim Niedertreten der Trittplatte (32) im mittleren Bereich (32c) beide Achsbolzen (34) gegenüber dem Pedalfuß (33) übernehmen.

2. Bremspedal nach Anspruch 1, dadurch gekennzeichnet, daß die Achsbolzen (34) am Pedalfuß (33) befestigt sind und durch zwei Langlöcher (32d) in der Trittplatte (32) hindurchgreifen, deren Länge die Schwenkbeweglichkeit der Trittplatte (32) bestimmt.

3. Bremspedal nach Anspruch 1 oder 2, dadurch gekennzeichnet, daß mittig zwischen den Achsbolzen (34) an der Trittplatte (32) eine Feder (35) angreift, die sich am Pedalfuß (33) abstützt.

## Claims

1. Brake pedal for a brake and steering brake mechanism in vehicles, in particular agricultural tractors, having a foot plate which is displaceable from a spring-force centred position for normal braking towards both sides for the execution of steering-braking, characterised in that the foot plate (32) is supported by way of a spring force in its centre position via two swivel pins (34), placed alongside and at a distance from each other in the operating direction of the foot plate (32), but is freely displaceable in opposition thereto; and that two outer regions (32a, 32b) for steering-braking and a middle region (32c) for normal braking are defined by the spacing of the swivel pins (34) which regard to the foot plate (32), whereby during depression of the foot plate (32) in one of its regions (32a, 32b) outwardly of the swivel pins (34) only the swivel pin (34) defining this region supports the foot plate (32) against the pedal foot (33), and during depression of the foot plate (32) in the middle region (32c) both swivel pins (34) together support the foot plate against the pedal foot (33).

2. Brake pedal according to claim 1, characterised in that the swivel pins (34) are mounted on the pedal foot (33) and extend through two elongate holes (32d) in the foot plate (32), the length of which determines the swivel-range of the foot plate (32).

3. Brake pedal according to claim 1 or 2, characterised in that a spring (35) engages the foot plate (32) centrally between the swivel pins (34), which spring is anchored on the pedal foot (33).

## Revendications

1. Pédale de frein pour une installation de freinage et de freinage de direction de véhicules, notamment de tracteurs agricoles, avec une plaque d'appui pouvant pivoter des deux côtés pour l'exécution de freinages de direction, à partir d'une position médiane pour freinages normaux centrée par effet de ressort par rapport à la base de la pédale, caractérisée en ce que: la plaque d'appui (32) est appuyée dans sa position médiane sur la base de la pédale (33) par un effet de ressort au moyen de deux boulons axiaux (34) disposés côte à côte à quelque distance, mais est par ailleurs libre en direction opposée et en ce qu'il est défini par suite de la distance des boulons axiaux (34) à la plaque d'appui (32) deux secteurs extérieurs (32a, 32b) pour les freinages de direction et un secteur médian (32c) pour les freinages normaux, telles que, lorsqu'on enfonce la plaque d'appui (32) dans un des secteurs extérieurs (32a, 32b), des boulons axiaux (34) seul le boulon axial (34) définissant respectivement ce secteur assume le soutien de la plaque d'appui (32) par rapport à la base de la pédale (33) et que, lorsqu'on enfonce la plaque d'appui (32) dans le secteur médian (32c), les deux boulons axiaux (34) assument conjointement le soutien de la plaque d'appui (32) par rapport à la base de la pédale.

2) Pédale de frein selon la revendication 1, caractérisée en ce que les boulons axiaux (34) sont fixés à la base de la pédale et sont engagés dans la plaque d'appui à travers deux trous oblongs (32d), dont la longueur détermine l'amplitude du pivotement de la plaque d'appui (32).

3) Pédale de frein selon la revendication 1 ou 2, caractérisée en ce qu'un ressort (35) qui s'appuie sur la base de la pédale (33) agit sur la plaque de base (32), en position centrale entre les boulons axiaux (34).

EP 0 279 868 B1

*Fig. 1*

Fig. 2

Fig. 3

Fig. 5

Fig. 4